# EUROPEAN PATENT APPLICATION

(11) **EP 4 759 469 A1**
(43) Date of publication of application: **17.06.2026**
(21) Application number: 24218775.5
(22) Date of filing: 10.12.2024
(51) Int. Cl.: B23K 20/10, B23K 101/42

(54) **DEVICE AND METHOD FOR ATTACHING PIN HOUSINGS OR PINS TO A SUBSTRATE USING ULTRASONIC WELDING**

(71) Applicant: Infotech, AG, 4500 Solothurn (CH)
(72) Inventor: Fischer, Ernest, 3267 Seedorf (CH); Bürgi, Urs, 3270 Aarberg (CH)
(74) Representative: Keller Schneider Patent- und Markenanwälte AG

(57) **Abstract**

The invention relates to a device (1) for successively attaching pin housings (5) and/or pins (5) using ultrasonic welding to a substrate (7), the device (1) comprising: 1) a supply portion (2), with the supply portion (2) being configured to provide pin housings (5) and/or pins (5) to N support portions (4), N being an integer equal to one or two; 2) the N support portions (4), with each support portion (4) of the N support portions (4) being configured to successively receive pin housings (5) and/or pins (5) from the supply portion (2); 3) a first displacement portion (12), with the first displacement portion (12) being configured to selectively displace each support portion (4) of the N support portions (4) between (i) a respective receiving position in which the respective support portion (4) is configured to receive a pin housing (5) or a pin (5) from the supply portion (2) and (ii) a respective providing position in which the respective support portion (4) is configured to provide the received pin housing (5) or pin (5) to an ultrasonic welding portion (3, 8); 4) the ultrasonic welding portion (3, 8), which ultrasonic welding portion (3, 8) comprises a sonotrode (3); and 5) a second displacement portion (9), with the second displacement portion (9) being configured to selectively displace the sonotrode (3) of the ultrasonic welding portion (3, 8) with respect to the N support portions (4) between (i) a safe position, in which safe position any support portion (4) of the N support portions (4) does not come into direct contact with the sonotrode (3) during a displacement of the respective support portion (4) between the respective receiving position and the respective providing position through the first displacement portion (12), (ii) a pick-up position, in which pick-up position the ultrasonic welding portion (3, 8) is able to pick up, with the sonotrode (3), a received pin housing (5) or pin (5) from a support portion (4) of the *N* support portions (4) that is in the providing position, and (iii) a welding position, in which welding position the ultrasonic welding portion (3, 8) is configured to ultrasonically weld a picked-up pin housing (5) or pin (5) to the substrate (7). The invention also relates to a method for successively attaching pin housings (5) and/or pins (5) using ultrasonic welding to a substrate (7).

## Description

### Technical Field

Pin housings, which may also be termed pin holders as they are configured for holding pins, and/or pins are frequently attached to substrates that are used for electronic applications, for example to direct bonded copper substrates for power electronic applications. Pin housings may be ultrasonically welded to the substrate, with pins subsequently being placed into a cavity of the pin housing. The pins may then be used for electrical contacting of electronic circuitry on the substrate.

Pin housings and/or pins are typically welded in a sequential manner, i.e., one after another. In prior art solutions, pin housings and/or pins are provided sequentially by a vibratory bowl feeder to a linear guide system, from which linear guide system pin housings and/or pins are picked up by a sonotrode, with the linear guide system on which the pin housings and/or pins are transported being separate from the device carrying the sonotrode. With such known prior art solutions, the rate at which pin housings and/or pins may be ultrasonically welded to a substrate is often too low for specific applications.

### Summary of the invention

It is the object of the invention to provide a device and a method for attaching pin housings and/or pins to a substrate using ultrasonic welding that mitigate at least some of the disadvantages of solutions as known in the prior art. In particular, it is a further object of the invention to provide a device and a method for attaching pin housings and/or pins to a substrate using ultrasonic welding that enable a faster sequential attachment rate. The solution of the invention is specified in claims 1 and 12.

The invention relates to a device for successively attaching pin housings and/or pins using ultrasonic welding to a substrate, the device comprising:
1) a supply portion, with the supply portion being configured to provide pin housings and/or pins to *N* support portions, *N* being an integer equal to one or two;
2) the *N* support portions, with each support portion of the *N* support portions being configured to successively receive pin housings and/or pins from the supply portion;
3) a first displacement portion, with the first displacement portion being configured to selectively displace each support portion of the *N* support portions between (i) a respective receiving position in which the respective support portion is configured to receive a pin housing or a pin from the supply portion and (ii) a respective providing position in which the respective support portion is configured to provide the received pin housing or pin to an ultrasonic welding portion;
4) the ultrasonic welding portion, which ultrasonic welding portion comprises a sonotrode; and
5) a second displacement portion, with the second displacement portion being configured to selectively displace the sonotrode of the ultrasonic welding portion with respect to the *N* support portions between (i) a safe position, in which safe position any support portion of the *N* support portions does not come into direct contact with the sonotrode during a displacement of the respective support portion between the respective receiving position and the respective providing position through the first displacement portion, (ii) a pick-up position, in which pick-up position the ultrasonic welding portion is able to pick up, with the sonotrode, a received pin housing or pin from a support portion of the *N* support portions that is in the providing position, and (iii) a welding position, in which welding position the ultrasonic welding portion is configured to ultrasonically weld a picked-up pin housing or pin to the substrate.

A pin housing may also be termed sleeve terminal. A pin housing may be a tubular terminal that may support a pin that is inserted into the pin housing. A pin housing may be made by crimping wire rods into a tubular shape, for example. A pin housing may comprise flanges on one or on both sides; optionally, the pin housing may be plated.

The device according to the invention is able to weld pin housings and/or pins ultrasonically to a substrate. The substrate may be embodied as a (bonded) integrated circuit or as a (bonded) semiconductor, or as a power electronic substrate, in particular a direct bonded copper (DBC) substrate or active metal brazed (AMB) substrate or insulated metal substrate (IMS); the substrate may also be embodied as a baseplate or as a cooling plate/heatsink/water jacket or as a module, for example a power electronics module or a multi-chip module; the substrate may also be embodied as a ceramic substrate.

The pin housings and/or pins that are ultrasonically welded to the substrate may be used for providing electrical contacting points for facilitating electrical contacting of electronic components on or in the substrate. The pin housings and/or pins may therefore preferentially be electrically conductive. The material of the pin housings and/or pins is such that it is suited for ultrasonic welding.

The supply portion of the device is embodied such that it may directly provide pin housings and/or pins to *N* support portions of the device. In case the number of support portions is equal to one, the supply portion may comprise one tube through which pin housings or pins may be transported to the supply portion; in case the number of support portions is equal to two, the supply portion may comprise two tubes through which pin housings or pins may be transported to the two supply portions, each tube corresponding to a respective supply portion. The *N* tubes may be profiled and adapted to a shape and size of the pin housings and/or pins that may be transported to the *N* tubes. The *N* tubes may be connected to a feeder unit, in particular a vibratory bowl feeder.

The device further comprises a first displacement portion that is configured to displace the *N* support portions selectively. In case the device comprises only one support portion, the first displacement portion is able to displace the support portion between a receiving position and a providing position. In case the device comprises two support portions, the first displacement portion is able to displace independently (i) a first support portion of the two support portions between a respective receiving position and a respective providing position and (ii) a second support portion of the two support portions between a respective receiving position and a respective providing position.

At any one time, only one support portion may be in the respective providing position in which it may provide a received pin housing or pin to an ultrasonic welding portion of the device, which ultrasonic welding portion comprises a sonotrode. In case the device comprises two support portions, the two respective providing positions may be intermittently displaced to their respective providing position.

The supply portion and the *N* support portions, *N* being equal to one or two, are embodied such that the supply portion only provides a pin housing or a pin to a support portion if the respective support portion is in the receiving position. The first displacement portion is preferentially embodied such that is allows a precise and quick displacement of a support portion between its receiving position and its providing position. The device is preferentially embodied such that the distances needed to displace the *N* support portions between their respective receiving and providing positions are short. The supply portion therefore preferentially supplies pin housings and/or pins close to the sonotrode of the ultrasonic welding portion.

In case the device comprises two support portions, the two support portions may be operated in an interleaved manner to provide received pin housings or pins to the sonotrode. This way, operating conditions of both the supply portion and of the two support portions may be relaxed compared to the case that the device comprises only one support portion. In case that the supply portion comprises two tubes, for example, through which pin housings and/or pins may be transported to the two support portions, pin housings and/or pins may be transported at half the rate through each of the two tubes as compared to the case of only one support portion and one tube if the same total rate at which pin housings and/or pins are attached to the substrate is to be obtained. By having two support portions, more favorable operating conditions may thereby be obtained, as the slower rate at which pin housings and/or pins are transported through the two tubes, for example, may allow for more time for air to escape from the two tubes between successively passing-through pin housings and/or pins; further advantageously, each support portion may individually be moved less.

The device further comprises a second displacement portion that may selectively displace the sonotrode of the ultrasonic welding portion. A sonotrode is a tool that creates ultrasonic vibrations and is able to apply this vibrational energy to a solid, for example. Besides the sonotrode, the ultrasonic welding portion may also comprise a power supply to provide an alternating current oscillating at an ultrasonic frequency to the sonotrode. The ultrasonic welding portion may also comprise a housing. In order to displace the sonotrode and depending on the relative arrangement of the sonotrode with respect to the remaining parts of the ultrasonic welding portion, the second displacement portion may also displace other parts of the ultrasonic welding portion as well; optionally, the entire ultrasonic welding portion may be displaced by the second displacement portion.

The second displacement portion may displace the sonotrode between a safe position, a pick-up position and a welding position. In the safe position, the sonotrode is positioned such that the first displacement portion may displace the *N* support portions freely between their respective receiving and providing positions, i.e. when the sonotrode is positioned in the safe position, no physical contact between the sonotrode and the *N* support portions may occur during movement of the *N* support portions between their respective receiving and providing positions. The safe position may therefore correspond to different actual positions of the sonotrode, the safe position being characterized by the ability of the *N* support portions to be freely moved between their respective receiving and providing positions.

When a support portion of the *N* support portions that has received a pin housing or pin from the supply portion is in the providing position, the second displacement portion may displace the sonotrode to the pick-up position to pick up the pin housing or pin with the sonotrode.

Besides displacing the sonotrode between the safe position and the pick-up position, the second displacement portion may also move the sonotrode to a welding position, the welding position corresponding to a position of the sonotrode in which the picked-up pin housing or pin may be ultrasonically welded to the substrate. The pick-up position may be between the safe position and the welding position; to reach the welding position from the safe position, the sonotrode may need to pass the pick-up position. When moving the sonotrode to the welding position, the *N* support portions may need to be in their respective receiving positions.

As the pin housings and/or pins are directly provided to the device for attaching pin housings and/or pins using ultrasonic winding, an increased speed of attaching pin housings and/or pins may advantageously be obtained. The device according to the invention may typically be mounted on a guide system, in particular a Cartesian guide system, which guide system may displace the device independently along two substantially orthogonal directions. The second displacement portion may be such that when the device is mounted to such a guide system, the second displacement portion may displace the sonotrode in a direction that is substantially orthogonal to the two directions of movement of the guide system. Accordingly, pin housings and/or pins may be mounted at different places on a substrate. As the pin housings and/or pins are directly provided to the device, irrespective of where the device is currently positioned by the guide system, pin housings and/or pins may be provided to the device at a rate that is substantially independent of the position of the device as determined by the guide system to which the device may be mounted. Advantageously, the speed at which pin housings and/or pins may be ultrasonically welded to a substrate may thus be increased.

The displacement of the *N* support portions by the first displacement portion may advantageously be optimized jointly with the displacement of the sonotrode by the second displacement portion. As the second displacement portion requires a certain amount of time to move the sonotrode from the safe position to the pick-up position, for example, movement of the sonotrode from the safe position to the pick-up position may already be initiated before movement of a support portion with a received pin housing and/or pin from the respective receiving position to the respective providing position is completed. Other relative movements between the sonotrode on one hand and the *N* support portions on the other hand, as further below described with respect to the method according to the invention, may similarly be optimized with respect to one another to improve the overall speed of attaching pin housings and/or pins using the device according to the invention.

As the *N* support portions may be moved rapidly by the first displacement portion and may be subject to large accelerations, to keep the received pin housing and/or pin at a defined position on the support portion that has received the pin housing and/or pin, the *N* support portions preferably comprise respective holding portions. Each holding portion for example may be embodied as a suitable opening in the respective support portion, with the received pin housing or pin being received on top of the respective opening and sucked to the opening through a pressure difference between an interior of the respective opening and an outside environment that otherwise surrounds the received pin housing and/or pin. Each holding portion may also comprise an indentation in the support portion, the indentation being matched to a shape of the pin housing or pin to be received, for example. In case of pin housings with a circular flange on one side, for example, the indentation may be circular and suited for receiving the pin housing with its circular flange.

In an embodiment of the device according to the invention, the first displacement portion comprises *N* linear motors, in particular embodied as voice coil linear motors, or *N* eccentric drives, with each linear motor of the *N* linear motors or each eccentric drive of the *N* eccentric drives being configured to displace a corresponding support portion of the *N* support portions.

Alternatively, the first displacement portion may displace the *N* support portions also pneumatically or by other suitable means.

In a further embodiment of the device according to the invention, the supply portion comprises *N* tubes, with each tube of the *N* tubes having a corresponding support portion of the *N* support portions, wherein the supply portion is configured to successively transport pin housings and/or pins through the *N* tubes to the *N* support portions.

The *N* tubes may be made of polyethylene or other similar materials, for example.

In a further embodiment of the device according to the invention, each tube of the *N* tubes is configured to be connected to a feeder unit, in particular embodied as a vibratory bowl feeder, at a respective first end of the respective tube.

The feeder unit may comprise suitable means to shoot pin housings and/or pins through the *N* tubes to the respective support portion.

In a further embodiment of the device according to the invention, an inner diameter of each tube of the *N* tubes is matched to a shape and size of the pin housings and/or pins that the supply portion is configured to provide to the *N* support portions.

The inner diameter of each tube may preferentially be such that, when transporting a pin housing or pin through the tube, an orientation of the pin housing or pin may not be changed: said differently, orientation of the pin housing or pin entering the respective tube at a respective first end may substantially correspond to an orientation of the pin housing or pin leaving the respective tube at a respective second end close to the respective support portion; this way, it may advantageously be ensured that pin housings and/or pins reach the support portions with a desired orientation.

In a further embodiment of the device according to the invention, each tube of the *N* tubes comprises a respective second end at which respective second end the respective tube is closest to the corresponding support portion of the *N* support portions, and wherein each tube of the *N* tubes is positioned such with respect to the corresponding support portion of the *N* support portions that a displacement of the corresponding support portion caused by the first displacement portion does not change a relative position between the sonotrode and the respective second end of the respective tube.

When a support portion is in its respective receiving position, the second end of the tube corresponding to the support portion may be positioned such with respect to the support portion that a sufficient distance between the support portion and the second end of the tube may be available in which a pin housing or pin may be present. Thus, after the support portion has received a pin housing or pin, the support portion may be displaced thereafter without the received pin housing or pin touching the respective tube through which it was transported. The device may further be such that movement of each support portion of the *N* support portions does not move the corresponding second end of the respective tube with respect to the sonotrode.

In a further embodiment of the device according to the invention, the device further comprises *N* attachment portions, with each attachment portion of the *N* attachment portions having (i) a corresponding support portion of the *N* support portions, (ii) a corresponding tube of the *N* tubes and (iii) a corresponding linear motor of the *N* linear motors or a corresponding eccentric drive of the *N* eccentric drives, wherein the corresponding linear motor or the corresponding eccentric drive is arranged on the respective attachment portion and is configured to displace the corresponding support portion with respect to the respective attachment portion, and wherein each attachment portion comprises a corresponding fixing portion for fixing the corresponding tube at the respective attachment portion.

The *N* attachment portions of the device may be such that the *N* linear motors or the *N* eccentric drives that may be part of the first displacement portion may displace the *N* support portions with respect to the *N* attachment portions. The *N* linear motors, for example, may displace the *N* support portions along rails, which rails may be provided on the *N* attachment portions, for example. Each attachment portion may further comprise a fixing portion that may fix a tube to the respective attachment portion and thereby restrict movement of the tube with respect to the attachment portion. Preferably, each fixing portion fixes the tube close to the second end of the respective tube. As the tube may be made of a flexible material and may therefore deform, through the fixing portion advantageously it may be ensured that the second end of the tube at which pin housings and/or pins may leave the tube keeps a defined relative position with respect to the corresponding support portion.

In a further embodiment of the device according to the invention, each fixing portion of the *N* fixing portions is embodied as a through-hole through the corresponding attachment portion, with the corresponding tube passing through the through-hole.

In a further embodiment of the device according to the invention, each support portion of the *N* support portions comprises a respective holding portion for holding the successively received pin housings and/or pins.

In a further embodiment of the device according to the invention, the first displacement portion is configured to selectively displace each support portion of the *N* support portions substantially along a first direction, and wherein the second displacement portion is configured to displace the sonotrode of the ultrasonic welding portion substantially along a second direction, which second direction is substantially orthogonal to the first direction.

In case of two support portions, the two support portions are preferably positioned at a same height with respect to the second direction, which second direction may pass through the sonotrode. When in their respective receiving positions, the two support portions are preferably symmetrically positioned around the second direction that may pass through the sonotrode. Advantageously, each support portion may therefore need to be displaced by a same distance from its respective receiving position to its respective providing position. When the two support portions are in their respective receiving position, between them there is sufficient space for the sonotrode to pass through.

In a further embodiment of the device according to the invention, the second displacement portion and the ultrasonic welding portion are configured such that the sonotrode may be brought from the safe position to the pick-up position through a first displacement of the sonotrode along the second direction by the second displacement portion, and wherein the second displacement portion and the ultrasonic welding portion are configured such that the sonotrode may be brought from the pick-up position to the welding position through a second displacement of the sonotrode along the second direction by the second displacement portion.

The invention also relates to a method for successively attaching pin housings and/or pins using ultrasonic welding to a substrate, the method using a device according to any one of the preceding claims, wherein the method comprises the following steps, which steps are repeated for each pin housing or pin to be attached to the substrate, wherein initially, before the following steps are carried out, the sonotrode of the ultrasonic welding portion is in the safe position and a support portion of the *N* support portions to which a pin housing or pin is next to be provided by the supply portion is in the respective receiving position:
1) Providing a pin housing or a pin through the supply portion to the support portion in the respective receiving position and receiving the provided pin housing or pin by the support portion in the respective receiving position;
2) Positioning the support portion with the received pin housing or pin in the respective providing position through the first displacement portion;
3) Positioning the sonotrode of the ultrasonic welding portion in the pick-up position through the second displacement portion, and picking up the received pin housing or pin on the support portion through the sonotrode;
4) Positioning the sonotrode of the ultrasonic welding portion with the picked-up pin housing or pin in the safe position through the second displacement portion;
5) Positioning the support portion in the respective receiving position through the first displacement portion;
6) Positioning the sonotrode of the ultrasonic welding portion in the welding position through the second displacement portion;
7) Ultrasonically welding the picked-up pin housing or pin to the substrate through the sonotrode; and
8) Positioning the sonotrode of the ultrasonic welding portion in the safe position through the second displacement portion.

Some of steps 1) to 8) may be carried out at least partly during a same time, while other steps may only be carried out one after the other. Step 2) may typically only be carried out after step 1) is completed, while steps 2) and 3) may at least partly be carried out at a same time. Step 3) may, however, also only be carried out after step 2) is completed. Step 4) may typically only be carried out after step 3) is completed. Steps 4) and 5) may at least partly be carried out at a same time.

The safe position to which the sonotrode with the picked-up pin housing or pin is moved to in step 4) may correspond to a different actual position of the sonotrode than the actual position of the sonotrode when being in the safe position before step 1) is carried out. In terms of actual position of the sonotrode, after step 4) is carried out, the sonotrode may be at an intermediate position between the actual position before step 1) is carried out and the pick-up position. Alternatively, the actual position of the sonotrode may be the same before step 1) is carried out and after step 4) is carried out. In general, before step 1) is carried out and after step 4) is carried out, the sonotrode should be in a position that allows movement of the support portion. The sonotrode therefore needs to be moved sufficiently far away from the pick-up position in step 4) to be able to carry out step 5). Step 6) may potentially also be partly carried out at a same time as step 5).

Step 7) may typically only be carried out after step 6) is completed. Similarly, step 8) may typically only be carried out after step 7) is completed.

In case of only one support portion, after all steps 1) to 8) are carried out and a pin housing or pin is ultrasonically welded to the substrate, the device is ready to weld a further pin housing to pin to the substrate.

In case of two support portions, steps 1) to 8) are carried out as well. The supply portion may be configured to provide pin housings or pins to the two support portions intermittently, i.e., after a first pin housing or pin has been provided to one of the two support portions, a subsequent second pin housing or pin is provided to the other of the two support portions. In principle, steps 1) to 8) may first be carried out for attaching the first pin housing or pin to the substrate, and then steps 1) to 8) may next be carried out for attaching the second pin housing or pin to the substrate.

To improve a rate of attachment, some steps for attaching the first pin housing or pin and for attaching the second pin housing or pin may be carried out in a time-delayed manner.

Step 1) for attaching the second pin housing or pin may be carried out during or after step 4) for attaching the first pin housing or pin is carried out, for example. Step 1) for attaching the second pin housing or pin may be carried out at a different time as well with respect to the steps that are carried out for attaching the first pin housing or pin.

Preferentially, all steps are timed such that in case of two support portions, the two support portions are used similarly. Compared to the case of only one support portion, in case of two support portions both support portions may be used at only half the rate while still providing a same overall attachment rate.

In an embodiment of the method according to the invention, N is equal to two, with a first pin housing or pin to be attached to the substrate before a second pin housing or pin, with the first pin housing or pin being provided by the supply portion to a first support portion of the two support portions and with the second pin housing or pin being provided by the supply portion to a second support portion of the two support portions, wherein for attaching the first pin housing or pin to the substrate, steps 1) to 8) of the method according to the invention are carried out, and wherein for attaching the second pin housing or pin to the substrate, steps 1) to 8) of the method according to the invention are carried out, with step 1) for attaching the second pin housing or pin to the substrate being carried out during or after step 4) for attaching the first pin housing or pin to the substrate, and with steps 2) to 8) for attaching the second pin housing or pin to the substrate being carried out during or after step 8) for attaching the first pin housing or pin to the substrate.

The invention also relates to a system for successively attaching pin housings and/or pins using ultrasonic welding to a substrate, the system comprising (i) a device according to the invention, (ii) a feeder unit, in particular embodied as a vibratory bowl feeder, for providing pin housings and/or pins to the device, with the supply portion of the device being connected to the feeder unit, (iii) a guide system for moving the device, with the guide system in particular being embodied as a Cartesian guide system, and (iv) a control unit configured to control the device and the feeder unit to carry out a method according to the invention.

The guide system may move the device independently along two orthogonal directions; the device may be attached in such a manner to the guide system that the second direction along which the second displacement portion may move the sonotrode is orthogonal to both of the two directions along which the guide system may move the device.

The method for successively attaching pin housings and/or pins to the substrate may at least partly be carried out at a same time as a moving of the device by the guide system as pin housings and/or pins are directly provided to the device. While the device is being moved by the guide system to a next position in which the device may carry out an attachment of a pin housing or pin to the substrate, the method may already be partly executed. Once or shortly after the device has been moved by the guide system to said next position, steps 6) and 7) of the method for successively attaching pin housings and/or pins to the substrate may be carried out. Advantageously, an improved rate of attachment of pin housings and/or pins to the substrate may thus be provided.

In an embodiment of the system according to the invention, the control unit is further configured to control the guide system for moving the device.

### Brief description of drawings

Fig. 1 shows a perspective view from below of a first embodiment of a device for successively attaching pin housings and/or pins using ultrasonic welding to a substrate;
Fig. 2a shows a sectional view through part of a second embodiment of a device for successively attaching pin housings and/or pins using ultrasonic welding to a substrate;
Fig. 2b shows a sectional view through part of the first embodiment of Fig. 1;
Fig. 3 shows an embodiment of a system for successively attaching pin housings and/or pins using ultrasonic welding to a substrate; and
Fig. 4 shows, for the device according to the second embodiment, a sequence of steps for attaching a pin housing or pin using ultrasonic welding to a substrate.

### Detailed description of drawings

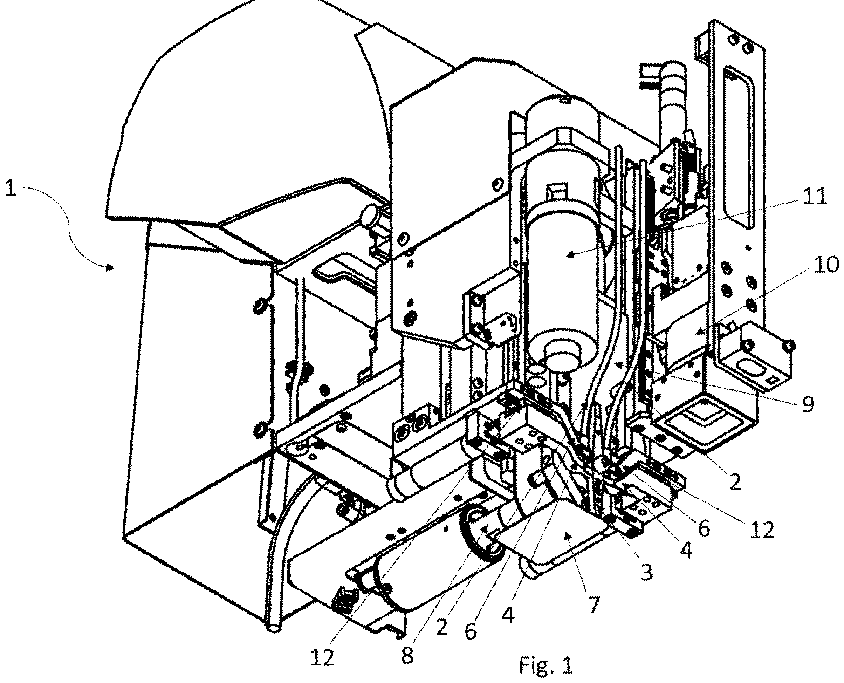

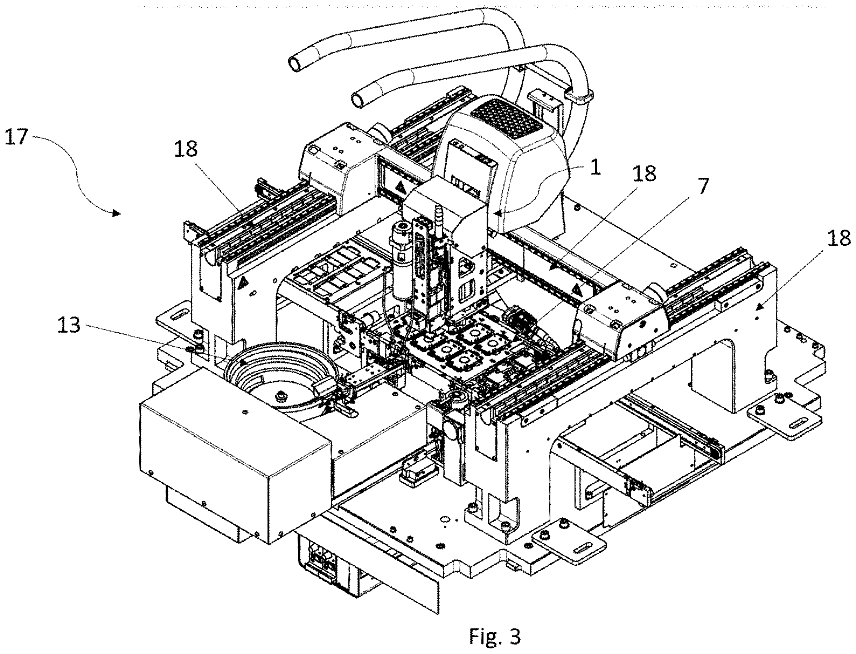

Fig. 1 shows a perspective view from below of a first embodiment of a device 1 for successively attaching pin housings and/or pins using ultrasonic welding to a substrate 7. The term 'below' is to be understood with respect to a placement of the device 1 in a system 17, for example the system 17 as shown in Fig. 3. With respect to a direction in which gravity applies, the substrate 7 as shown in Fig. 1 would typically be closer to earth than for example the two support portions 4 of the device 1. Accordingly, for the perspective view of Fig. 1, the device 1 is viewed from a viewing point that would be, provided the device 1 is placed in an envisioned manner, closer to earth than the device 1 itself.

The device 1 of Fig. 1 comprises two support portions 4, two tubes 2, two attachment portions 6, two eccentric drives 12 as part of a first displacement portion 12, a second displacement portion 9 and a sonotrode 3. Through the two tubes 2, the device 1 receives pin housings and/or pins from a feeder unit and provides the pin housings and/or pins successively to the two support portions 4. Each tube 2 of the two tubes 2 is positioned such that it may provide pin housings and/or pins to only one corresponding support portion 4 of the two support portions 4.

Each tube 2 of the two tubes 2 comprises a respective first end and a respective second end. While the second ends of the two tubes 2 are shown in Fig. 1, the second ends being the ends of the two tubes 2 that are close to the two support portions 4, the first ends of the two tubes 2 are not shown in Fig. 1, with the two tubes 2 instead being cut-off in Fig. 1 for purposes of illustration. The device 1 of Fig. 1 is such that when connected to a feeder unit, for example the feeder unit 13 as shown in Fig. 3, pin housings and/or pins are transported through the two tubes 2 from the first ends to the second ends such that the pin housings and/or pins, with each pin housing or pin passing through one of the two tubes 2, leave the two tubes 2 at their second ends close to the two support portions 4.

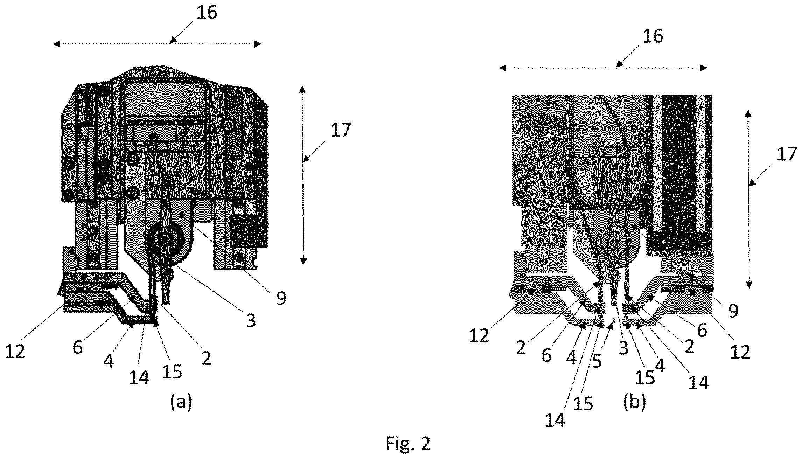

The two eccentric drives 12 are arranged such that the two support portions 4 may be moved relatively to the two attachment portions 6 by the two eccentric drives 12. More specifically, each eccentric drive 12 has a corresponding attachment portion 6 and a corresponding support portion 4. For the device according to the first embodiment of Fig. 1, a sectional view is shown in Fig. 2b in which the first direction 16 is indicated along which the two eccentric drives 12 may move the two support portions 4 relative to the two attachment portions 6. As clearly visible in Fig. 2b, the two attachment portions 6 each comprise a fixing portion 14 that is embodied as a through-hole through the respective attachment portion 6, with the corresponding tube 2 passing through the through-hole. As further visible in Fig. 2b, the two support portions 4 each comprise a holding portion 15 for holding the successively received pin housings 5 and/or pins 5, the holding portions 15 for example comprising vacuum suction means or suitable grooves/recesses.

The sonotrode 3 of the device 1 of Fig. 1 is connected to a piezoelectric driving unit 8, with the sonotrode 3 and the piezoelectric driving unit 8 being part of the ultrasonic welding portion of the device 1.

In the perspective view of Fig. 1, mostly a front part of the second displacement portion 9 is visible. The second displacement portion 9 is arranged such with respect to the two support portions 4 and the sonotrode 3 that it may move the sonotrode 3 relative to the two support portions 4 in a second direction 17 as shown in Fig. 2b. When embedding the device 1 of Fig. 1 in a system 17 as shown in Fig. 3, the second displacement portion 9 may enable movement of the sonotrode 3 along one axis of a Cartesian coordinate system, with the guide system 18 of Fig. 3 enabling movement of the sonotrode 3 along the remaining two axes of the Cartesian coordinate system.

The device 1 as shown in Fig. 1 further comprises a camera portion 10 which may comprise a camera for visually inspecting the substrate 7 to which a pin housing and/or pin is to be attached, which camera portion 10 may be moved by an actuator 11 along a direction that is substantially parallel to the second direction 17 as shown in Fig. 2b. The camera portion 10 may be used for providing visual information to a control unit.

As already discussed, Fig. 2b shows a sectional view through the device 1 of Fig. 1, while Fig. 2a corresponds to a sectional view through a device 1 according to a second embodiment. The device 1 according to the second embodiment differs from the device 1 of Fig. 1 primarily in that only one tube 2, only one support portion 4, only one attachment portion 6 and only one eccentric drive 12 are present. Other than that, the device 1 of Fig. 2a may substantially correspond to the device 1 of Fig. 1.

Fig. 3 shows an embodiment of a system 17 for successively attaching pin housings and/or pins using ultrasonic welding to a substrate 7. As shown in Fig. 3, the device 1 is arranged on a Cartesian guide system 18, with the Cartesian guide system 18 enabling movement of the device 1 along two substantially orthogonal directions, wherein the second displacement portion 9 of the device 1 enables movement of the sonotrode 3 along the second direction 17 as discussed with respect to Figs. 1, 2a and 2b, the second direction 17 being orthogonal to the two directions of movement provided by the Cartesian guide system 18.

The system 17 of Fig. 3 is configured to interact with a conveyor structure that is configured to transport substrates 7 to which pin housings and/or pins are to be attached by the device 1. In the embodiment of Fig. 3, the conveyor structure is configured to transport substrates 7 along a direction that is substantially parallel to a main direction of extent of the part of the Cartesian guide system 18 on which part the device 1 is arranged. As the sonotrode 3 of the device 1 may be independently moved along three substantially orthogonal directions provided by the Cartesian guide system 18 and the second displacement portion 9, the system 17 of Fig. 3 provides a high degree of flexibility for attaching pin housings and/or pins to a substrate 7.

For providing pin housings and/or pins to the device 1, specifically to the supply portion 2 of the device, the system 17 further comprises a feeder unit 13, in particular embodied as a vibratory bowl feeder. While not explicitly shown in Fig. 3, the device 1 is connected in such a way to the feeder unit 13 that the feeder unit 13 supplies pin housings and/or pins to the supply portion 2 of the device 1. The feeder unit 13 is embodied such that pin housings and/or pins may be supplied intermittently to the two tubes 2 of the device 1, i.e. a pin housing or pin may be provided to a first tube, a next pin housing or pin may then be provided to a second tube, a further pin housing or pin may then be provided again to the first tube etc.

The system 17 further comprises a control unit that is not explicitly shown in Fig. 3, which control unit is configured to control the first displacement portion 12 and the second displacement portion 9 of the device 9 and optionally also the Cartesian guide system 18 and the feeder unit 13. The control unit may also control the conveyor structure for transporting substrates 7. In case the device 1 comprises a camera portion 10, the control unit may receive visual information from the camera portion 10 to determine control signals for the Cartesian guide system 18, the feeder unit 13, the first displacement portion 12 and/or the second displacement portion 9.

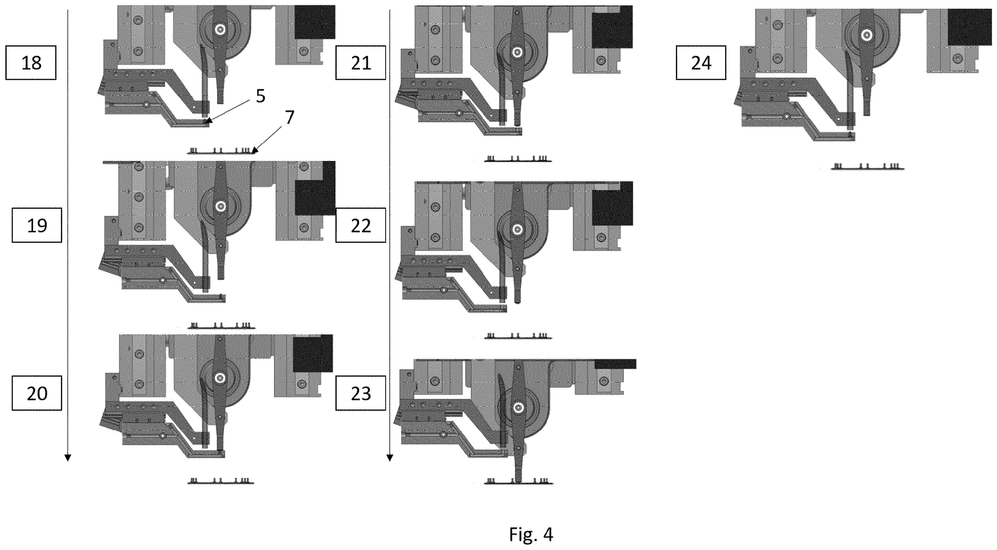

Fig. 4 shows, for the device 1 according to the second embodiment, a sequence of steps for attaching a pin housing 5 or pin 5 using ultrasonic welding to a substrate 7. The steps may be executed in the order indicated in Fig. 4, starting from the subfigure in the top left corner and ending with the subfigure at the top right corner. After all steps shown in Fig. 4 have been carried out, another repetition may start, the new repetition again starting with the subfigure in the top left corner.

First, a pin housing 5 or pin 5 is provided 18 to the support portion 4 through the tube 2, which received pin housing 5 or pin 5 may be held by the holding portion 15 of the support portion 4. For receiving the pin housing 5 or pin 5, the support portion 4 is in its receiving position and the sonotrode 3 is in its safe position, in which safe position of the sonotrode 3 the support portion 4 may be moved by the eccentric drive 12 without the support portion 4 coming into contact with the sonotrode 3. Accordingly, the safe position of the sonotrode 3 may refer to different actual positions of the sonotrode 3, with the different actual positions having in common the property that the sonotrode 3 and the support portion 4 do not touch during displacement of the support portion 4 by the first displacement portion 12.

Next, the support portion 4 with the received pin housing 5 or pin 5 is positioned 19 in its providing position by the eccentric drive 12. In the providing position as shown in the central subfigure on the left of Fig. 4, the received pin housing 5 or pin 5 is substantially below the sonotrode 3. The sonotrode 3 is then positioned 20 in its pick-up position in which pick-up position the sonotrode 3 also picks up the pin housing 5 or pin 5 from the support portion 4. Positioning 19 of the support portion 4 in its providing position may at least partly be carried out at a same time as positioning 20 of the sonotrode 3 in its pick-up position.

After having picked-up the pin housing 5 or pin 5, the sonotrode 3 is positioned 21 in its safe position. The safe position of the sonotrode 3 as shown in the top subfigure in the center of Fig. 4 is different from the safe position of the sonotrode 3 as shown in the top subfigure on the left of Fig. 4, i.e. the sonotrode 3 may only be moved to a sufficient extent to next allow positioning 22 of the support portion 4 in its receiving position. After the support portion 4 has moved sufficiently far towards its receiving position during the positioning 22, the sonotrode 9 may be positioned 23 in its welding position. Positioning 22 of the support portion 4 in its receiving position may at least partly be carried out at a same time as positioning 23 of the sonotrode 3 in its welding position. In the welding position, the picked-up pin housing 5 or pin 5 is welded 23 to the substrate 7. Once welding is completed, the sonotrode 3 is positioned 24 in its safe position, which safe position corresponds to the safe position before the pin housing 5 or pin 5 is provided to the support portion 4.

The steps for attaching a pin housing 5 or pin 5 to the substrate 7 as shown in Fig. 4 may be carried out at least partly at a same time as a positioning of the device 1 by the Cartesian guide system 18 of Fig. 3. This way, the device 1 may be moved by the Cartesian guide system 18 to a desired position so that shortly after the device has reached the desired position, the sonotrode is positioned 23 in its welding position. Advantageously, the overall rate of attaching pin housings 5 and/or pins 5 to the substrate 7 may thereby be optimized.

## Claims

1. Device (1) for successively attaching pin housings (5) and/or pins (5) using ultrasonic welding to a substrate (7), the device (1) comprising:
1) a supply portion (2), with the supply portion (2) being configured to provide pin housings (5) and/or pins (5) to N support portions (4), N being an integer equal to one or two;
2) the N support portions (4), with each support portion (4) of the N support portions (4) being configured to successively receive pin housings (5) and/or pins (5) from the supply portion (2);
3) a first displacement portion (12), with the first displacement portion (12) being configured to selectively displace each support portion (4) of the N support portions (4) between (i) a respective receiving position in which the respective support portion (4) is configured to receive a pin housing (5) or a pin (5) from the supply portion (2) and (ii) a respective providing position in which the respective support portion (4) is configured to provide the received pin housing (5) or pin (5) to an ultrasonic welding portion (3, 8);
4) the ultrasonic welding portion (3, 8), which ultrasonic welding portion (3, 8) comprises a sonotrode (3); and
5) a second displacement portion (9), with the second displacement portion (9) being configured to selectively displace the sonotrode (3) of the ultrasonic welding portion (3, 8) with respect to the N support portions (4) between (i) a safe position, in which safe position any support portion (4) of the N support portions (4) does not come into direct contact with the sonotrode (3) during a displacement of the respective support portion (4) between the respective receiving position and the respective providing position through the first displacement portion (12), (ii) a pick-up position, in which pick-up position the ultrasonic welding portion (3, 8) is able to pick up, with the sonotrode (3), a received pin housing (5) or pin (5) from a support portion (4) of the N support portions (4) that is in the providing position, and (iii) a welding position, in which welding position the ultrasonic welding portion (3, 8) is configured to ultrasonically weld a picked-up pin housing (5) or pin (5) to the substrate (7).

2. Device (1) according to claim 1, wherein the first displacement portion (12) comprises *N* linear motors, in particular embodied as voice coil linear motors, or *N* eccentric drives (12), with each linear motor of the *N* linear motors or each eccentric drive of the *N* eccentric drives (12) being configured to displace a corresponding support portion (4) of the *N* support portions (4).

3. Device (1) according to claim 1 or 2, wherein the supply portion (2) comprises *N* tubes (2), with each tube (2) of the *N* tubes (2) having a corresponding support portion (4) of the *N* support portions (4), wherein the supply portion (2) is configured to successively transport pin housings (5) and/or pins (5) through the *N* tubes (2) to the *N* support portions (4).

4. Device (1) according to claim 3, wherein each tube (2) of the *N* tubes (2) is configured to be connected to a feeder unit (13), in particular embodied as a vibratory bowl feeder (13), at a respective first end of the respective tube (2).

5. Device (1) according to claim 3 or 4, wherein an inner diameter of each tube (2) of the *N* tubes (2) is matched to a shape and size of the pin housings (5) and/or pins (5) that the supply portion (2) is configured to provide to the *N* support portions (4).

6. Device (1) according to claim 3, 4 or 5, wherein each tube (2) of the *N* tubes (2) comprises a respective second end at which respective second end the respective tube (2) is closest to the corresponding support portion (4) of the *N* support portions (4), and wherein each tube (2) of the *N* tubes (2) is positioned such with respect to the corresponding support portion (4) of the *N* support portions (4) that a displacement of the corresponding support portion (4) caused by the first displacement portion (12) does not change a relative position between the sonotrode (3) and the respective second end of the respective tube (2).

7. Device (1) according to claim 6, further comprising *N* attachment portions (6), with each attachment portion (6) of the *N* attachment portions (6) having (i) a corresponding support portion (4) of the *N* support portions (4), (ii) a corresponding tube (2) of the *N* tubes (2) and (iii) a corresponding linear motor of the *N* linear motors or a corresponding eccentric drive of the *N* eccentric drives (12), wherein the corresponding linear motor or the corresponding eccentric drive (12) is arranged on the respective attachment portion (6) and is configured to displace the corresponding support portion (4) with respect to the respective attachment portion (6), and wherein each attachment portion (6) comprises a corresponding fixing portion (14) for fixing the corresponding tube (2) at the respective attachment portion (6).

8. Device (1) according to claim 7, wherein each fixing portion (14) of the *N* fixing portions (14) is embodied as a through-hole (14) through the corresponding attachment portion (6), with the corresponding tube (2) passing through the through-hole (14).

9. Device (1) according to any one of the preceding claims, wherein each support portion (4) of the *N* support portions (4) comprises a respective holding portion (15) for holding the successively received pin housings (5) and/or pins (5).

10. Device (1) according to any one of the preceding claims, wherein the first displacement portion (12) is configured to selectively displace each support portion (4) of the *N* support portions (4) substantially along a first direction (16), and wherein the second displacement portion (9) is configured to displace the sonotrode (3) of the ultrasonic welding portion (3, 8) substantially along a second direction (17), which second direction (17) is substantially orthogonal to the first direction (16).

11. Device (1) according to claim 10, wherein the second displacement portion (9) and the ultrasonic welding portion (3, 8) are configured such that the sonotrode (3) may be brought from the safe position to the pick-up position through a first displacement of the sonotrode (3) along the second direction (17) by the second displacement portion (9), and wherein the second displacement portion (9) and the ultrasonic welding portion (3, 8) are configured such that the sonotrode (3) may be brought from the pick-up position to the welding position through a second displacement of the sonotrode (3) along the second direction (17) by the second displacement portion (9).

12. Method for successively attaching pin housings (5) and/or pins (5) using ultrasonic welding to a substrate (7), the method using a device (1) according to any one of the preceding claims, wherein the method comprises the following steps, which steps are repeated for each pin housing (5) or pin (5) to be attached to the substrate (7), wherein initially, before the following steps are carried out, the sonotrode (3) of the ultrasonic welding portion (3, 8) is in the safe position and a support portion (4) of the *N* support portions (4) to which a pin housing (5) or pin (5) is next to be provided by the supply portion (2) is in the respective receiving position:
1) Providing (18) a pin housing (5) or a pin (5) through the supply portion (2) to the support portion (4) in the respective receiving position and receiving the provided pin housing (5) or pin (5) by the support portion (4) in the respective receiving position;
2) Positioning (19) the support portion (4) with the received pin housing (5) or pin (5) in the respective providing position through the first displacement portion (12);
3) Positioning (20) the sonotrode (3) of the ultrasonic welding portion (3, 8) in the pick-up position through the second displacement portion (9), and picking up the received pin housing (5) or pin (5) on the support portion (4) through the sonotrode (3);
4) Positioning (21) the sonotrode (3) of the ultrasonic welding portion (3, 8) with the picked-up pin housing (5) or pin (5) in the safe position through the second displacement portion (9);
5) Positioning (22) the support portion (4) in the respective receiving position through the first displacement portion (12);
6) Positioning (23) the sonotrode (3) of the ultrasonic welding portion (3, 8) in the welding position through the second displacement portion (9);
7) Ultrasonically welding (23) the picked-up pin housing (5) or pin (5) to the substrate (7) through the sonotrode (3); and
8) Positioning (24) the sonotrode (3) of the ultrasonic welding portion (3, 8) in the safe position through the second displacement portion (9).

13. Method according to claim 12, with *N* being equal to two, with a first pin housing or pin to be attached to the substrate before a second pin housing or pin, with the first pin housing or pin being provided by the supply portion (2) to a first support portion of the two support portions (4) and with the second pin housing or pin being provided by the supply portion (2) to a second support portion of the two support portions (4), wherein for attaching the first pin housing or pin to the substrate (7), steps 1) to 8) of the method according to claim 12 are carried out, and wherein for attaching the second pin housing or pin to the substrate (7), steps 1) to 8) of the method according to claim 12 are carried out, with step 1) for attaching the second pin housing or pin to the substrate (7) being carried out during or after step 4) for attaching the first pin housing or pin to the substrate (7), and with steps 2) to 8) for attaching the second pin housing or pin to the substrate (7) being carried out during or after step 8) for attaching the first pin housing or pin to the substrate (7).

14. System (17) for successively attaching pin housings (5) and/or pins (5) using ultrasonic welding to a substrate (7), the system (17) comprising (i) a device (1) according to any one of claims 1 to 11, (ii) a feeder unit (13), in particular embodied as a vibratory bowl feeder, for providing pin housings (5) and/or pins (5) to the device (1), with the supply portion (2) of the device (1) being connected to the feeder unit (13), (iii) a guide system (18) for moving the device (1), with the guide system (18) in particular being embodied as a Cartesian guide system (18), and (iv) a control unit configured to control the device (1) and the feeder unit (13) to carry out a method according to claim 12 or 13.

15. System (17) according to claim 14, with the control unit further being configured to control the guide system (18) for moving the device (1).
